# EUROPEAN PATENT APPLICATION

(11) **EP 0 816 727 A2**
(43) Date of publication of application: **07.01.1998**
(21) Application number: 97304921.6
(22) Date of filing: 04.07.1997
(51) Int. Cl.: F16K 1/12, F16K 1/44

(54) **Diaphragm valve assembly**

(30) Priority: 04.07.1996 GB 9614090
(71) Applicant: Alfa Laval Saunders Limited, Gwent NP44 3XX (GB)
(72) Inventor: Williams, Paul Martin, Cwmbran, Gwent NP44 6JQ (GB)
(74) Representative: Goodenough, Nigel

(57) **Abstract**

The present invention relates to a valve assembly, and more particularly to a valve assembly for selectively establishing a sterile barrier in a pipework system. The invention provides a valve assembly (13) comprising a valve body (14) having an inlet (15) and an outlet (16) for connection in the pipework system; first and second valve seats (18,20) formed on the valve body (14); an inlet chamber (17) connecting the inlet (15) to the first valve seat (18) and an outlet chamber (19) connecting the second valve seat (20) to the outlet (16). The valve assembly (13) further comprises an intermediate chamber (21) defined within the valve body connecting the first valve seat to the second valve seat. A first closure assembly (22) is mounted on the valve body (14) for co-operating with the first valve seat (18) to selectively isolate the inlet chamber (17) from the intermediate chamber (21). A second closure assembly (24) is also mounted on the valve body (14) for co-operating with the second valve seat (20) to selectively isolate the outlet chamber (19) from the intermediate chamber (21).
Furthermore, the valve assembly (13) also comprises a sterilisation passage (26) for communicating a sterilising fluid to the intermediate chamber (21). A drain passage (28) is also provided to drain fluid from the intermediate chamber (21). The arrangement has the advantage of providing a simple valve body shape in which the intermediate chamber can be both small and of a shape susceptible to ready cleaning and sterilisation.

## Description

This invention relates to a valve assembly, and more particularly a valve assembly for selectively establishing a sterile barrier in a pipework system.

In various industries, and in particular in the pharmaceutical and biotechnology industries, it is necessary to establish a sterile barrier in a pipework system. Heretofore, the required sterile barrier has been established by providing two adjacent valves in the pipework system, the valves being interconnected by short a length of pipework, and by providing means for sterilising the chamber defined between the valves by the short length of pipework. Purpose-made valve assemblies have been provided for this purpose. The purpose-made assemblies of the prior art have, however, been complex fabrications involving a large number of welded joints. Also, the sterile chamber formed by the pipework between the valves of the prior art has an undesirably large volume and complex shape making it difficult to achieve effective sterilisation of the chamber.

According to the present invention there is provided a valve assembly for selectively establishing a sterile barrier in a pipework system, the valve assembly comprising: a valve body having an inlet and an outlet for connection in the pipework system; first and second valve seats formed on the valve body; an inlet chamber connecting the inlet to the first valve seat; an outlet chamber connecting the second valve seat to the outlet; an intermediate chamber defined within the valve body connecting the first valve seat to the second valve seat; a first closure assembly mounted on the valve body for co-operating with the first valve seat to selectively isolate the inlet chamber from the intermediate chamber; a second closure assembly mounted on the valve body for co-operating with the second valve seat to selectively isolate the outlet chamber from the intermediate chamber; a sterilisation passage for communicating a sterilising fluid to the intermediate chamber; and a drain passage to drain fluid from the intermediate chamber.

In order to establish a sterile barrier between the pipework system on the inlet side of the valve assembly and the pipework system on the outlet side of the valve assembly both closure assemblies are operated to isolate the intermediate chamber from both the inlet chamber and the outlet chamber. The drain passage is then opened and a sterilising fluid, for example steam, is passed into the intermediate chamber from the sterilisation passage. Any residual line content, condensed steam and surplus steam exits from the intermediate chamber via the drain passage. Steam flow continues until the intermediate chamber has been sterilised.

Preferably, the valve body is an integral unitary body, for example a casting or forging of stainless steel-. Preferably, the body includes first and second faces which extend parallel to each other or at an acute angle relative to each other and to which the closure assembly are secured. Such an arrangement facilitates a particularly simple body shape in which the intermediate chamber can be made both small and of a shape susceptible to ready cleaning and sterilisation. Additionally, such a structure substantially reduces the number of welded joints which must be formed (as compared with prior art valves to perform a comparable function) thereby increasing manufacturing reliability and reducing manufacturing costs.

The invention will be better understood from the following description of a preferred embodiment thereof given by way of example only, reference being had to the accompanying drawings wherein:
Figure 1 shows schematically and in perspective view a prior art valve assembly for selectively establishing a sterile barrier;
Figure 2 shows a schematic perspective view of an embodiment of a valve assembly according to the present invention;
Figure 3 is a transverse cross-sectional view of the valve assembly of Figure 2;
Figure 4 is a top plan view of the valve assembly of Figures 2 and 3; and
Figure 5 is a longitudinal cross-section through the valve assembly of Figures 2 - 4 illustrating the normal flow path through the valve.

Throughout the drawings the valve closure assemblies have been omitted from the valve bodies shown, in the interests of clarity. It is to be understood, however, that each valve seat will have associated therewith a closure assembly, typically a diaphragm closure assembly comprising a diaphragm and a bonnet assembly. Suitable operating means, for example a handwheel and spindle assembly or a pneumatic or electric actuator, will be associated with the diaphragm for moving the diaphragm selectively into a position in engagement with a valve seat to prevent fluid flow thereat, and into a position remote from the valve seat.

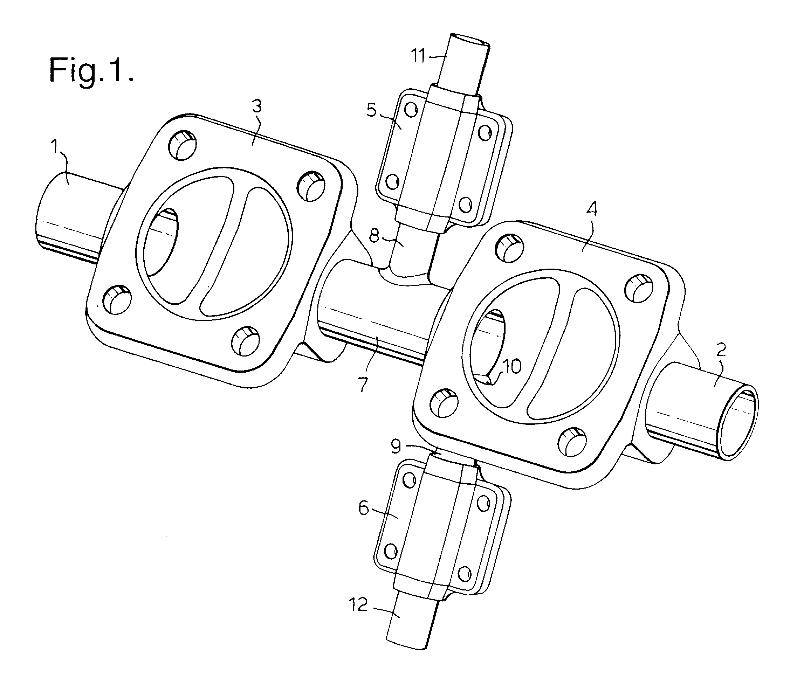

Referring firstly to Figure 1, a prior art valve for the purpose of establishing a sterile barrier within a pipework system is shown. The valve illustrated is designated a "Steam Cross Valve" and is marketed by Alfa Laval Saunders Limited of Grange Road, Cwmbran, Gwent, NP44 3XX, United Kingdom. In use, the illustrated assembly is inserted in a pipework system by means of an inlet connection 1 and an outlet connection 2. The valve assembly comprises a first valve body 3, a second valve body 4, a third valve body 5 and a fourth valve body 6. The valve bodies 3 and 4 are interconnected by a length of tubing 7 which constitutes part of the pipework system. The tubing 7 is formed with a branch connection 8 which is in turn connected to the valve body 5. A branch connection 9 extends from a port 10 within the valve body 4 to the valve body 6. An inlet pipe 11 is provided to supply sterilising fluid, typically steam, to the valve body 5 and a drain pipe 12 is secured to the valve body 6.

In use, during normal operation of the relevant plant, closure assemblies associated with the valve bodies 3 and 4 are in the fully open position and closure assemblies associated with the valve bodies 5 and 6 are in the fully closed position. Accordingly, line content can flow from the inlet 1 via the valve body 3, the tubing 7 and the valve body 4 to the outlet 2. When it is desired to establish a sterile barrier between the inlet 1 and the outlet 2 the closure assemblies associated with the valve bodies 3 and 4 are closed and the closure assemblies associated with the valve bodies 5 and 6 are opened. Remaining line content trapped between the valve bodies 3, 4 will drain through the branch 9 and valve body 7 to the drain pipe 12. Steam will flow from the inlet 11, valve body 5 and branch passage 8 to the tubing 7 to sterilise the chamber formed between the closure assemblies of the valve bodies 3, 4.

To produce a high quality installation the connections between the tubing 7 and the valve bodies 3 and 4 and between the branch 9 and the valve body 4 must be fillet welded at both the exterior and the interior of the valve bodies. In addition, the connection between the branch pipe 8 and the tubing 7 is fillet welded on both the exterior and the interior of the tubing 7. Accordingly, fabrication of the illustrated assembly involves the completion of 8 fillet welds. In addition, the chamber provided between the closure assemblies of the valve 3, 4 is of relatively complex shape and relatively large volume. Accordingly, steam must be passed through the chamber for a substantial period to ensure satisfactory sterilisation.

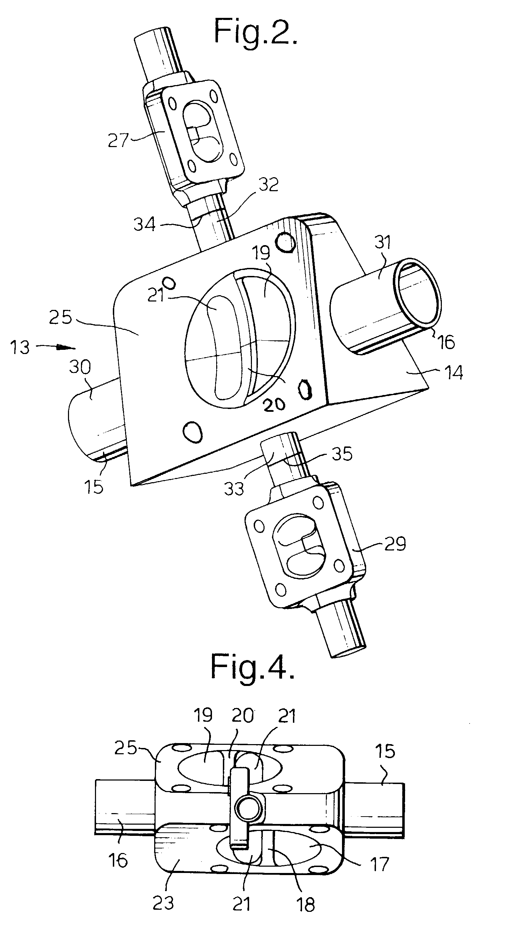

Referring now to Figures 2-5 the illustrated valve assembly 13 according to the invention comprises a unitary valve body 14 formed of a suitable material by any suitable process, for example formed of stainless steel by forging or casting. The valve assembly includes an inlet 15 and outlet 16 by means of which the assembly is mounted in a pipework system. An inlet chamber 17 connects the inlet 15 to a first valve seat 18 formed on the valve body. Similarly, an outlet chamber 19 connects the outlet 16 to a second valve seat 20 formed on the valve body. An intermediate chamber 21 in the form of a slot extending through the valve body connects the first valve seat 18 to a second valve seat 20.

A first closure assembly 22 is mounted on one face 23 of the valve body and, in the illustrated embodiment, comprises a diaphragm valve closure assembly. As will be understood by those skilled in the art, a diaphragm valve closure assembly comprises a diaphragm and a closure mechanism, the closure mechanism being effective to move the diaphragm into engagement with a valve seat in order to prevent fluid flow past the valve seat. In the present case, when the diaphragm of the closure assembly 22 is in engagement with the seat 18 the intermediate chamber 21 is isolated from the inlet chamber 17. Similarly, a second closure assembly 24 is mounted on a face 25 of the valve body and includes a diaphragm which can be moved into engagement with the seat 20 in order to isolate the outlet chamber 19 from the intermediate chamber 21.

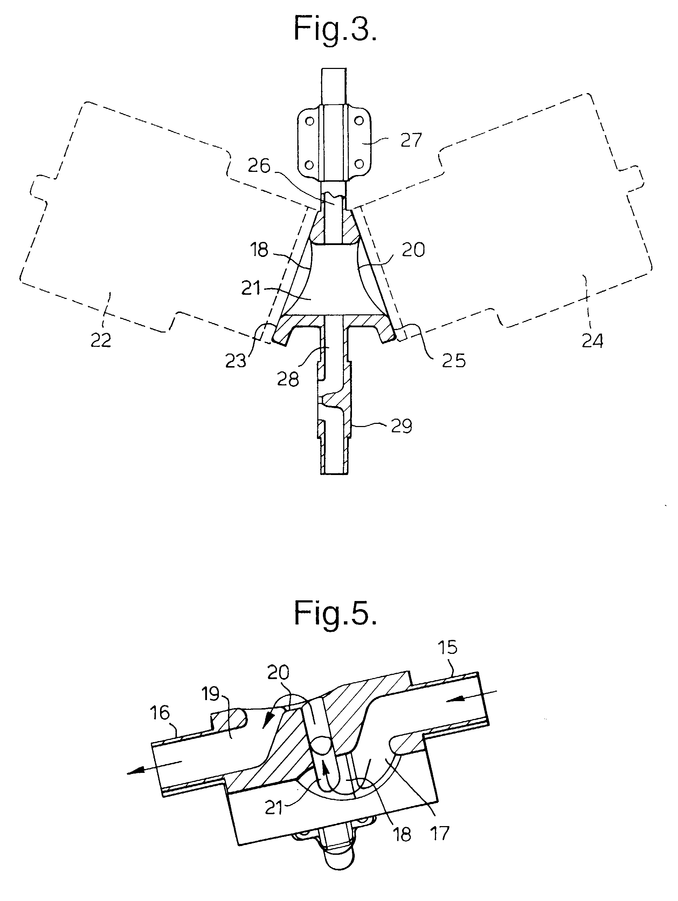

In normal operation of the valve assembly, i.e. when the valve assembly is open to allow fluid flow through the passageway system, flow through the valve is as illustrated in Figure 5, that is to say fluid from the inlet 15 flows via the inlet chamber 17, over the valve seat 18, through the intermediate passage 21, over the valve seat 20 and through the outlet chamber 19 to the outlet 16.

The valve body is provided with a sterilisation passage 26 which extends from a valve 27 into the intermediate chamber 21. Similarly, a drain passage 28 extends from the intermediate chamber 21 to a drain valve 29. In normal use of the valve, as described above, the valve 27 and 29 are closed.

When it is desired to establish a sterile barrier between the inlet 15 and the outlet 16, the closure assemblies 22, 24 are operated to bring their respective diaphragms into engagement with the valve seats 18, 19 and thereby isolate the intermediate chamber 21 from both the inlet 15 and outlet 16. The sterilisation valve 27 and drain valve 29 are then opened to admit a sterilisation fluid, for example steam, into the intermediate chamber 21 and to allow residual line fluid, condensate and surplus steam to exit the intermediate chamber 21 via the drain passage 28. It will be noted, particularly from Figure 3, that the intermediate chamber 21 is relatively small and is of a relatively simple shape admitting to relatively quick and easy sterilisation thereof.

It will be noted that by making the faces 23 and 25 on which the closure assemblies 22 and 24 respectively are mounted either parallel to each other or extending at an acute angle to each other the intermediate chamber 21 is in the form of a simple slot extending through the valve body. Comparison of Figures 1 and 2 shows that the assembly of the present invention is of a relatively simple and compact size and offers a far less complex shape for the required sterilisation chamber. Also, because both of the main valve seats are formed on, and the intermediate chamber is formed in, the integral valve body, the degree of fabrication required to produce the structure of Figure 2 is considerably less than that required to produce the assembly of Figure 1. In a particularly preferred embodiment of the invention stub pipes 30 and 31 formed integrally with the body 14 provide the inlet and outlet passages 15,16 respectively. Similarly, stub pipes 32,33 formed integrally with the body 14 provide the sterilisation passage 26 and the drain passage 28 respectively. The valve bodies 27 and 29 are also formed with integral stub pipes which are external fillet welded to the stubs 32,33 respectively by fillet welds 34,35. Accordingly, the entire structure of Figure 2 may be formed with only two welds (34 and 35) as compared with the eight welds of the prior art structure of Figure 1.

Whilst the invention has been described with particular reference to a valve having a single inlet and a single outlet controlled by a pair of closure assemblies it should be appreciated that by appropriate design of the valve body additional inlets and/or outlets can be provided. Each additional inlet/outlet will have associated therewith a valve seat and a closure assembly so that each additional inlet/outlet can be isolated from the intermediate chamber 21. Thus, by closing all the closure assemblies the intermediate chamber may be sterilised to establish a sterile barrier. Thereafter, by appropriate opening of selected closure assemblies a wide range of possible flow arrangements can be established.

## Claims

1. A valve assembly for selectively establishing a sterile barrier in a pipework system, the valve assembly comprising a valve body having an inlet and an outlet for connection in the pipework system; first and second valve seats located on the valve body; an inlet chamber connecting the inlet to the first valve seat; an outlet chamber connecting the second valve seat to the outlet; an intermediate chamber defined within the valve body connecting the first valve seat to the second valve seat; a first closure assembly mounted on the valve body for co-operating with the first valve seat to selectively isolate the inlet chamber from the intermediate chamber; a second closure assembly mounted on the valve body for co-operating with the second valve seat to selectively isolate the outlet chamber from the intermediate chamber; a sterilisation passage for communicating a sterilising fluid to the intermediate chamber; and a drain passage to drain fluid from the intermediate chamber.

2. A valve assembly as claimed in claim 1, wherein the valve body is an integral unitary body.

3. A valve assembly as claimed in claim 2, wherein the integral unitary body is a casting or forging of stainless steel.

4. A valve assembly as claimed in any of the preceding claims, wherein the first and second valve seats are located substantially opposite one another on opposite sides of the valve body.

5. A valve assembly as claimed in any of the preceding claims, wherein the valve body incorporates a first face to which the first closure assembly is secured and a second face to which the second closure assembly is secured.

6. A valve assembly as claimed in claim 5, wherein the first and second faces extend parallel to each other.

7. A valve assembly as claimed in claim 5, wherein the first and second faces extend at an acute angle relative to each other.

8. A valve assembly as claimed in any of claims 5 to 7, wherein the first and second faces are located on opposite sides of the valve body.

9. A valve assembly as claimed in any preceding claim wherein the intermediate chamber is a slot extending through the valve body from one side thereof to the opposite side thereof.

10. A valve assembly as claimed in any preceding claim wherein the closure assemblies each includes a closure diaphragm and an operating mechanism for moving the down diaphragm into and out of engagement with its associated seat.

11. A valve assembly as claimed in any preceding claim wherein the sterilisation passage and the drain passage are mutually aligned and extend from opposite sides of the intermediate chamber.
